Europäisches Patentamt
European Patent Office
Office européen des brevets

(19)

(11) Publication number: 0 309 996 A2

# (12) EUROPEAN PATENT APPLICATION

(21) Application number: 88115891.9

(22) Date of filing: 27.09.88

(51) Int. Cl.4: C08F 214/06 , //(C08F214/06, 210:00),(C08F214/06,216:18)

(30) Priority: 28.09.87 JP 245094/87
03.12.87 JP 306569/87
03.12.87 JP 306570/87
12.07.88 JP 174350/88

(43) Date of publication of application:
05.04.89 Bulletin 89/14

(84) Designated Contracting States:
BE DE FR GB IT

(71) Applicant: KANEGAFUCHI KAGAKU KOGYO KABUSHIKI KAISHA
2-4 Nakanoshima 3-chome
Kita-ku Osaka-shi Osaka-fu(JP)

(72) Inventor: Yoshida, Chiaki
Higashi No. 126 1-16-3, Nishihata
Takasago-shi Hyogo-ken(JP)
Inventor: Shimizu, Takeshi
3-5-12, Nishihata
Takasago-shi Hyogo-ken(JP)
Inventor: Ikeda, Munehiro
2-63, Okihama-cho Takasago-cho
Takasago-shi Hyogo-ken(JP)
Inventor: Kuwabara, Yasushi
2-63, Okihama-cho Takasago-cho
Takasago-shi Hyogo-ken(JP)

(74) Representative: Vossius & Partner
Siebertstrasse 4 P.O. Box 86 07 67
D-8000 München 86(DE)

## (54) Gamma-ray resistant polyvinyl chloride-based resinous material and manufacturing method thereof.

(57) A $\gamma$-ray resistant polyvinyl chloride-based resinous material containing as a major component a vinyl chloride-based copolymer obtained through copolymerization of 0.5 - 10 parts by weight of at least one selected from the group consisting of $\alpha$-olefins and vinyl ethers with 100 parts by weight of vinyl chloride is disclosed as well as a manufacturing method thereof. This invention provides resinous materials stable to irradiation with $\gamma$-rays and also excelled in weather resistance.

EP 0 309 996 A2

# γ-RAY RESISTANT POLYVINYL CHLORIDE-BASED RESINOUS MATERIAL AND MANUFACTURING METHOD THEREOF

## BACKGROUND OF THE INVENTION

### 1. Field of the Invention

The present invention relates to a γ-ray resistant polyvinyl chloride-based resinous material and more particularly to a polyvinyl chloride-based resinous material resistant to γ-ray-induced discoloration.

### 2. Description of the Prior Art

For sterilizing medical instruments, ethylene oxide gas has hitherto been used but this has problems such as residues thereof and poor workability. Lately, therefore, it has been progressively replaced by γ-ray sterilization but this has a defect of causing discoloration of instruments made of polyvinyl chloride-based resins. Meanwhile, instruments made of polyethylene resin or polypropylene resin, which are less subject to γ-ray-induced discoloration, are less flexible and less transparent than those of polyvinyl chloride resins. There has, therefore, been a strong need for polyvinyl chloride-based resins improved in resistance to γ-ray-induced discoloration as materials for such instruments.

As methods for improving the γ-ray resistance of polyvinyl chloride resins there have been proposed methods of adding various stabilizers (Publications Nos. 3653/'82, 10535/'87) and methods of using a high-polymer reaction product of polyvinyl chloride resin with dithiocarbamate (Laid-open Application No. 63092/'75) or a copolymer of vinyl chloride with

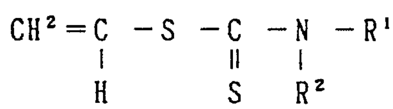

(Laid-Open Application No. 34282/'80, 34283/'80), but the methods of adding stabilizers are not sufficiently effective for improvement of resistance to γ-rays, while the aforementioned high-polymer reaction product and copolymer are difficult to manufacture commercially.

## SUMMARY OF THE INVENTION

It is a primary object of the present invention to provide a polyvinyl chloride-based resinous material resistant to irradiation with γ-rays.

Another object of the invention is to provide a polyvinyl chloride-based resinous material resistant to γ-ray irradiation and also improved in weather resistance.

Still another object of the invention is to provide a manufacturing method for the aforementioned polyvinyl chloride-based resins.

Further objects and features of the present invention will become apparent to those skilled in the art from reading of the detailed description of the invention below.

## DETAILED DESCRIPTION OF THE INVENTION

Firstly, the present invention relates to a γ-ray resistant polyvinyl chloride-based resinous material containing as a principal ingredient vinyl chloride copolymer prepared through copolymerization of 100

parts by weight of vinyl chloride with 0.5 - 10 parts by weight of at least one monomer selected from the group consisting of α-olefins and vinyl ethers, and secondly, it relates to a manufacturing method for the γ-ray resistant polyvinyl chloride-based resin, wherein 100 parts by weight of vinyl chloride is copolymerized with 0.5 - 10 parts by weight of at least one monomer selected from the group consisting of α-olefins and vinyl ethers.

As α-olefins usable in the present invention, ethylene, propylene, butene, pentene, hexene and α-olefins not less than 7 in carbon number may be included, but α-olefins not less than 4 in carbon number are preferred in that the pressure required for polymerization is not higher than in polymerization of vinyl chloride alone and that thermal stability of molded articles therefrom is good. Also, α-olefins less in carbon number are not suited for manufacture of resins high in polymerization degree, for, when the quantity added is the same by weight, the polymerization degree of the copolymer is bound to be low due to chain transfer effect. Also preferred are α-olefins not more than 30 in carbon number, for α-olefins more than 30 in carbon number are difficult to mix homogeneously with vinyl chloride. α-olefins may be used alone or in combination of two or more.

The quantity of α-olefin to be copolymerized with vinyl chloride depends on its carbon number, too, but it is preferred to be in a range of 0.5 - 10 parts by weight. If its quantity is less than 0.5 parts by weight, the resistance to γ-rays is not sufficiently improved, while lowering of strength and transparency may result, if its quantity is more than 10 parts by weight.

As vinyl ethers usable in the present invention, methyl vinyl ether, ethyl vinyl ether, isobutyl vinyl ether, etc., may be included and preferred are those of 3 - 25 in carbon number. Vinyl ethers less than 3 in carbon number are not suited for manufacture of resins high in polymerization degree for, when the quantity added is the same by weight, the polymerization degree becomes low due to the aforementioned chain transfer effect. Meanwhile, vinyl ethers more than 25 in carbon number are also less suited because of the increased difficulty in mixing and dissolving in vinyl chloride homogeneously. Vinyl ethers, too, may be used either alone or in combination of two or more.

The quantity of vinyl ether to be copolymerized with vinyl chloride, which also depends on the carbon number, is preferably 0.5 - 10 parts by weight. If its quantity is less than 0.5 part by weight, no sufficient improvement of the product's resistance to γ-rays is attainable, while lowering of strength and transparency may result, if it is more than 10 parts by weight.

In the present invention, it is also possible to use the aforementioned α-olefin and vinyl ether in combination, and it is also possible to add a minor amount of some monomers copolymerizable with α-olefin or vinyl ether.

In the present invention, it is also possible to add to the resin composition conventional additives and/or auxiliary agents, e.g. a plasticizer. As suitable plasticizers, dioctylphthalate (DOP), dioctyl adipate (DOA), etc., may be exemplified, but there is no limitation in particular. The quantity of plasticizer is preferably 5 - 80 parts by weight per 100 parts by weight of vinyl chloride copolymer but it depends on the purpose for which it is used. As stabilizers, epoxidized soybean oil, zinc stearate, calcium stearate, stearic acid, etc., may be exemplified but, besides, other lubricants, antioxidants, ultraviolet ray absorbers and the like are usable as well and there is no particular limitation in this respect. The quantity of stabilizer is preferably 2 - 15 parts by weight per 100 parts by weight of vinyl chloride copolymer. If its quantity is less than 2 parts by weight, thermal stability lowers, while problems such as exudation (migration) of stabilizer and increase of cost may arise, if it is more than 1.5 parts by weight.

Manufacture of vinyl chloride/ α-olefin or vinyl ether copolymer used according to the present invention may be carried out by such methods as mass polymerization, suspension polymerization and emulsion polymerization but there is no particular limitation in this respect. Commercially most popular is the suspension polymerization using an aqueous medium, but as suspending agents, initiators and other additives, those well known and used in the polymerization of vinyl chloride are usable. As suspending agents, polyvinyl alcohol, methyl cellulose, polyethylene oxide, polyvinyl pyrrolidone, etc., may be exemplified, and as initiators, organic peroxides such as benzoyl peroxide, lauroyl peroxide, dioctyl peroxy dicarbonate, cumyl peroxy neodecanoate, diisoproplyl peroxy dicarbonate and t-butyl peroxy pivalate, azo compounds such as 2,2′-azobisisobutylonitrile and 2,2′-azobis-2,4-dimethylvaleronitrile are usable alone or in combination. As other additives, anti-oxidants, ultraviolet ray absorbers, chain transfer agents, crosslinking agents, etc., may be exemplified. Charging of vinyl chloride and α-olefin or vinyl ether may be done simultaneously so as to place them under the polymerizing conditions at the same time, or in portions after initiation of polymerization.

According to the present invention, materials resistant to γ-rays as well as to weathering can be manufactured by the use of a polyvinyl chloride-based resin not less than 1,000 in polymerization degree, containing 2 - 10 % by weight of α-olefin not less than 10 in carbon number and not more than 1 % by

weight of residual α-olefin monomer.

If not less than 2 % by weight of α-olefin less than 10 in carbon number is used for copolymerization, the degree of polymerization is lowered and it results in an increased difficulty of manufacturing a polyvinyl chloride-based resin not less than 1,000 in polymerization degree (viscosity average polymerization degree according to JIS K-6721) which, as plasticized polyvinyl chloride resin, is widely used as material of medical instruments. When the same quantity in % by weight of α-olefin is used for copolymerization, the resulting copolymer is better resistant to γ-rays if the carbon number of the α-olefin used is higher. It is, therefore, advisable to use α-olefin not less than 10 in carbon number and still more preferably not less than 14 in carbon number which allows an increased content of the same for a still improved resistance to γ-rays. It is, however, also advisable to keep the carbon number of α-olefin not more than 30, for otherwise the viscosity of α-olefin is unduly increased to interfere with its smooth addition in the course of polymerization. For improvement of resistance to γ-rays, it is preferred to have the content of α-olefin in the copolymer not less than 2 % by weight, and still more preferably not less than 3 % by weight. If it is in excess of 10 % by weight, it results in lowering of polymerization degree as well as transparency, hence it is generally preferred to have it not more than 8 % by weight. The aforementioned α-olefins, too, may be used either alone or in combination of two or more.

The amount of residual α-olefin monomer contained in the aforementioned α-olefin-vinyl chloride copolymer is required to be not more than 1 % by weight lest it should ooze out of the copolymer. While α-olefin less than 10 in carbon number is copolymerizable with vinyl chloride at the end of polymerization, α-olefin not less than 10 in carbon number is higher in reactivity so that a copolymer higher in α-olefin content is obtained in an early stage of polymerization. Hence, in order to obtain a copolymer close in structure to a random copolymer, it is advisable to add α-olefin in portions or continuously during the polymerization.

Hereafter, the present invention is explained in greater detail showing examples, which, however, by no means limit the scope of the invention.

Example 1

7.5 kg of deionized water, 3 g of methyl cellulose, 2 g of dioctyl peroxy dicarbonate and 2 g of cumyl peroxy neodecanoate were charged into an autoclave with an inside capacity of 20 liters and after displacement of air inside with nitrogen, 15 g of propylene and 3,000 g of vinyl chloride were added, and after polymerization for 8 hours at 45 °C the unconverted monomer was recovered with the inside pressure lowered by 2 $kg/cm^2$ from the steady level. Then the contents were taken out, filtered and dried, and approximately 2,400 g of a white powder were thus obtained.

To 100 parts by weight of this powder, 55 parts by weight of DOP, 5 parts by weight of epoxidized soybean oil (Adeca Argus Chemical Co., Ltd.'s "O-130'P"), 0.2 parts by weight of zinc stearate, 0.2 parts by weight of calcium stearate and 0.1 part by weight of stearic acid were added and the whole was blended to prepare a composition.

This composition was rolled at 150 °C and a 10 cm × 10 cm sheet, 2 mm thick was press-molded, and its change of discoloration was evaluated by the use of a color & color difference meter (Nippon Denshoku Kogyo, Ltd.'s Σ80 Color Measuring System) after irradiation with 5 Mrad of γ-rays on the basis of the change in b-value. The change of discoloration was rated lower when the value of [( Δb/Δb blank) × 100 (%) ] was smaller.

Δb = (b-value of sample after irradiation with γ-rays)
—(b-value of sample before irradiation)
Δb blank = (b-value of sheeted vinyl chloride homopolymer after irradiation with γ-rays)
—(b-value of the same before irradiation).

Examples 2 - 9, Control examples 1 - 2

As shown in Table 1, 9 - 360 g of α-olefins, 3 - 32 in carbon number were added instead of 15 g of propylene in Example 1 and polymerization was carried out at 40 °C or 45 °C, and a composition's sheet was prepared in the same way as in Example 1 and the change of discoloration was evaluated after irradiation with γ-rays in the same way as Example 1.

Control example 3

In Example 1, charging of 15 g of propylene was dispensed with and the polymerizing temperature was changed to 55 °C, and under otherwise the same conditions a homopolymer of vinyl chloride was obtained, a composition was prepared in the same way as described in Example 1 and its change of discoloration was evaluated.

Examples 10 - 18, Control examples 4 - 5

In Examples 1 - 9, the initiators were changed to 2 g of n-butyl neodecanoate and 2 g of dioctyl peroxy dicarbonate, polymerization was carried out at polymerizing temperatures of 50 °C and 55 °C, then, to the resulting 100 parts by weight of a copolymer 10 parts by weight of epoxidized soybean oil, 0.3 parts by weight of zinc stearate, 0.3 parts by weight of calcium stearate and 0.1 part by weight of stearic acid were added and the whole was blended to prepare each composition.

This composition was rolled at 180 °C to obtain a 0.5 mm thick sheet and the change of discoloration was evaluated after irradiation with γ-rays in the same way as in Examples 1 - 9.

Control example 6

In Example 10, charging of 15 g of propylene was dispensed with and the polymerizing temperature was changed to 65 °C, and under otherwise the same conditions a homopolymer of vinyl chloride was obtained, a composition was then prepared in the same way as in Examples 10 - 18 and the change of discoloration was evaluated by the use of 0.5 mm thick sheet of the composition.

Table 1

| | α-olefin | | Polymerization temp.(°C) | Transparency of sheet * | b-value | | |
|---|---|---|---|---|---|---|---|
| | Carbon number | Parts by wt. | | | γ -ray irradiation | | Δ b -value |
| | | | | | Before | After | |
| Example 1 | 3 (propylene) | 0.5 | 45 | ○ | 4.2 | 9.1 | 4.9 |
| 2 | " | 1.0 | 40 | ○ | 3.8 | 8.6 | 4.8 |
| 3 | 4 (butene) | 1.0 | 45 | ○ | 3.2 | 8.2 | 5.0 |
| 4 | " | 2.0 | 40 | ○ | 3.1 | 8.0 | 4.9 |
| 5 | 6 (hexene) | 2.0 | 45 | ○ | 3.0 | 7.6 | 4.6 |
| 6 | " | 4.0 | 40 | ○ | 2.9 | 7.2 | 4.3 |
| 7 | 16 | 4.0 | 45 | ○ | 2.8 | 6.4 | 3.6 |
| 8 | " | 8.0 | 40 | ○ | 2.6 | 6.2 | 3.6 |
| 9 | 32 | 10.0 | 40 | ○ | 2.5 | 6.0 | 3.5 |
| Control example 1 | 23 | 12.0 | 40 | Δ | 2.0 | 5.4 | 3.4 |
| 2 | 3 (propylene) | 0.3 | 45 | ○ | 4.0 | 9.8 | 5.8 |
| 3 | (vinyl chloride homopolymer) | | 55 | ○ | 3.2 | 10.7 | 7.5 |

* ○ : good Δ : rather bad x : bad

Table 2

| | α-olefin | | Polymerization temp.(°C) | Transparency of sheet * | b-value | | |
|---|---|---|---|---|---|---|---|
| | Carbon number | Parts by wt. | | | γ-ray irradiation | | Δ b -value |
| | | | | | Before | After | |
| Example 10 | 3 (propylene) | 0.5 | 55 | O | 6.1 | 10.2 | 4.1 |
| 11 | " | 1.0 | 50 | O | 5.4 | 9.8 | 4.4 |
| 12 | 4 (butene) | 1.0 | 55 | O | 4.8 | 9.0 | 4.2 |
| 13 | " | 2.0 | 50 | O | 4.4 | 8.6 | 4.2 |
| 14 | 6 (hexene) | 2.0 | 55 | O | 4.2 | 8.2 | 4.0 |
| 15 | " | 4.0 | 50 | O | 3.8 | 7.8 | 4.0 |
| 16 | 16 | 4.0 | 55 | O | 3.2 | 7.4 | 4.2 |
| 17 | " | 8.0 | 50 | O | 3.0 | 7.2 | 4.2 |
| 18 | 32 | 10.0 | 50 | O | 2.8 | 6.6 | 3.8 |
| Control example 4 | 32 | 12.0 | 50 | Δ | 2.5 | 6.0 | 3.5 |
| 5 | 3 (propylene) | 0.3 | 55 | O | 5.8 | 11.0 | 5.2 |
| 6 | (vinyl chloride homopolymer) | | 65 | O | 4.8 | 12.5 | 7.7 |

* O : good Δ : rather bad x : bad

As is apparent from the results shown in Tables 1 and 2, the materials made of vinyl chloride- α-olefin copolymers are lower in the change of discoloration after irradiation with γ-rays.

Example 19

7.5 kg of deionized water, 3 g of methyl cellulose and 6 g of 2,4,4-trimethylpentyl peroxy-2-neodecanoate were charged into an autoclave with an inside of capacity of 20 liters and after displacement of the air inside with nitrogen, 3 kg of vinyl chloride and 150 g of straight-chain alkylvinyl ether, 16 in carbon number were added and after polymerization for 8 hours at 40 °C the unconverted monomer was recovered with the inside pressure lowered by 1 kg/cm$^2$ from the steady level. Then the contents were taken out, filtered and dried, and approximately 2,400 g of a white powder were thus obtained. With this powder, the discoloration change was evaluated in the same way as described above.

Examples 20 - 26, Control examples 7 - 8

Instead of the 150 g of straight-chain alkylvinyl ether, 16 in carbon number used in Example 19, 9 - 360 g of vinyl ether, 3 - 20 in carbon number were added as shown in Table 3 and polymerization was carried out at 40 °C or 45°C, then each composition's sheet was prepared in the same way as in Example 19 and its discoloration change was evaluated after irradiation with γ-rays also in the same way as in Example 19.

Control example 9

In the Example 19, addition of 150 g of the straight- chain alkylvinyl ether, 16 in carbon number was dispensed with and the polymerizing temperature was changed to 55 °C, and under otherwise the same conditions a homopolymer of vinyl chloride was obtained, and then a sheeted composition was obtained and its change of discoloration was evaluated in the same way as in Example 19.

Table 3

| | Vinyl ether | | Polymerization temp.(°C) | b-value | | |
|---|---|---|---|---|---|---|
| | Carbon number | Parts by wt. | | γ-ray irradiation | | Δ b -value |
| | | | | Before | After | |
| Example 19 | 16 | 5 | 40 | 3.2 | 6.2 | 3.0 |
| 20 | 3 | 5 | 40 | 3.3 | 6.5 | 3.2 |
| 21 | 20 | 5 | 45 | 3.1 | 6.2 | 3.1 |
| 22 | 16 | 0.5 | 45 | 3.0 | 6.9 | 3.9 |
| 23 | 16 | 1 | 45 | 2.8 | 6.4 | 3.6 |
| 24 | 16 | 3 | 45 | 2.8 | 6.2 | 3.4 |
| 25 | 16 | 8 | 40 | 3.0 | 5.6 | 2.6 |
| 26 | 16 | 10 | 40 | 3.1 | 5.5 | 2.4 |
| Control example 7 | 16 | 12 | 40 | 2.3 | 4.3 | 2.0 |
| 8 | 16 | 0.3 | 45 | 3.5 | 9.3 | 6.8 |
| 9 | (vinyl chloride homopolymer) | | 55 | 3.2 | 10.7 | 7.5 |

As is apparent from the results shown in Table 3, the materials made of the vinyl chloride-vinyl ether copolymers are lower in the change of discoloration after irradiation with γ-rays.

Examples 27, 28

Instead of 15 g of polypropylene in Example 1, a mixture of α-olefin and vinyl ether, each being 16 in carbon number was added in amounts as set forth in Table 4 and polymerization was carried out at 40 °C or 45 °C. Then each composition's sheet was prepared in the same way as in Example 1 and the change of discoloration after irradiation with γ-rays was observed in the same way as in Example 1.

Table 4

| | α-olefin | | Vinyl ether | | Polymerization temp.(°C) | Transparency of sheet * | b-value | | |
|---|---|---|---|---|---|---|---|---|---|
| | Carbon number | Parts by wt. | Carbon number | Parts by wt. | | | γ-ray irradiation | | Δ b -value |
| | | | | | | | Before | After | |
| Example 27 | 16 | 3 | 16 | 2 | 40 | O | 3.1 | 6.2 | 2.9 |
| 28 | " | 0.3 | " | 0.2 | 45 | O | 3.0 | 6.8 | 3.8 |

* O : good Δ : rather bad x : bad

Example 29

7.5 kg of deionized water, 3 g of methyl cellulose, 6 g of dioctyl peroxy dicarbonate and 40 g of α-olefin, 10 in carbon number were charged into an autoclave with an inside capacity of 20 liters and polymerization was carried out at 40 °C with addition of 3,000 g of vinyl chloride after displacement of the air inside with nitrogen.

α-olefin was added further in an amount of 40 g, each 2 hours and 4 hours later respectively and the unconverted monomer was recovered 8 hours later. The contents were then taken out and filtered and

dried, and thus approximately 2,400 g of a white powder were obtained.

Using this powder, a composition was prepared, a sheet thereof was press-molded, and its change of discoloration was observed in the same way as in Example 1.

The quantity of α-olefin in the copolymer was calculated from the chlorine content of the same.

The viscosity average degree of polymerization was measured according to JIS K-6721. The residual α-olefin monomer was extracted from copolymer with n-hexane and its quantity was determined by gas-chromatography.

Examples 30 - 38, Control examples 10 - 12

Instead of α-olefin, 10 in carbon number used in Example 29, 60 - 300 g of α-olefin, 12 - 30 in carbon number shown in Table 5 were added in 3 portions in the course of polymerization, which was continued until the conversion rate at a polymerizing temperature of 40 - 45 °C reached approximately 80 %.

Control example 13

The polymerization was carried out in the same way as in Example 32, except that α-olefin was added at one time together with vinyl chloride, and the change of discoloration was observed in the same way as in Example 32.

Control example 14

KANEVINYL S 1003 (of Kanegafuchi Chemical Industry Co., Ltd.) was used as vinyl chloride homopolymer.

Table 5

| | α-olefin copolymerized | | α-olefin in copolymer (% by wt.) | Viscosity-average polymerization degree | Δb/Δb blank x100 (%) | Residual α-olefin monomer (% by wt.) |
|---|---|---|---|---|---|---|
| | Carbon number | Parts by wt. to vinyl chloride | | | | |
| Example 29 | 10 | 4 | 3.8 | 1080 | 41 | 0.6 |
| 30 | 12 | 4 | 4.1 | 1160 | 38 | 0.5 |
| 31 | 14 | 4 | 4.2 | 1220 | 35 | 0.4 |
| 32 | 16 | 4 | 4.1 | 1250 | 33 | 0.3 |
| 33 | 18 | 2 | 2.1 | 1380 | 47 | 0.1 |
| 34 | 18 | 4 | 4.2 | 1320 | 30 | 0.3 |
| 35 | 18 | 8 | 7.8 | 1260 | 24 | 0.6 |
| 36 | 18 | 10 | 9.4 | 1070 | 21 | 0.8 |
| 37 | 20 | 4 | 4.3 | 1360 | 28 | 0.4 |
| 38 | 30 | 4 | 4.5 | 1420 | 23 | 0.3 |
| Control example 10 | 8 | 2 | 1.6 | 1190 | 85 | 0.8 |
| 11 | 18 | 1 | 1.1 | 1410 | 73 | 0.2 |
| 12 | 18 | 12 | 10.5 | 920 | 18 | 0.9 |
| 13 | 18 | 4 | 2.2 | 1340 | 38 | 2.1 |
| 14 | vinyl chloride homopolymer | | | 1300 | 100 | - |

Examples 39-42, Control example 15

60 parts by weight of DOP, 3 parts by weight of epoxidized soybean oil "O-130-P", 1.5 parts by weight of tin-based stabilizer YVD-8831 (of Nitto Kasei, Ltd.) and 5 parts by weight of titanium oxide were added to 100 parts by weight of each of the copolymers obtained in Examples 29, 32, 34 and 38, and each mixture was blended to obtain a composition.

This composition was rolled at 150 °C and a 10 cm× 10 cm sheet was press-molded, this sheet was subjected to a 500-hour accelerated weathering test by the use of the Sunshine Weather Meter (of Suga Shikenki, Ltd.) at a black panel temperature of 63°C and then its change of discoloration [color difference (Δ E)] was measured by the use of the color & color difference meter used in Examples 1 - 10.

In Control example 15, evaluation was made in the same way as in Examples 39 - 42 using the vinyl chloride homopolymer of Control example 14.

The obtained test results are shown in Table 6.

Table 6

| | After 500-hour exposure test on Sunshine Weather Meter (ΔE) |
|---|---|
| Example 39 | 2.1 |
| " 40 | 1.8 |
| " 41 | 1.5 |
| " 42 | 1.2 |
| Control example 15 | 5.3 |
| Note: Weatherability is better with decreasing valueΔE. | |

As is apparent from the data shown in Table 5 and 6, α-olefin-vinyl chloride copolymers with a polymerization dagree of not less than 1,000 are excelled in resistance to γ-rays as well as in weatherability when the α-olefin used is not less than 10 in carbon number, the α-olefin content of the copolymer is 2 - 10 % by weight and the residual amount of α-olefin monomer is not more than 1 % by weight.

Example 43

7.5 kg of deionized water, 3 g of methyl cellulose, 6 g of dioctyl peroxy dicarbonate and 45 g of α-olefin, 10 in carbon number were charged into an autoclave with an inside capacity of 20 liters and polymerization was carried out at 40 °C with addition of 3,000 g of vinyl chloride after displacement of the air inside with nitrogen.

α-olefin was added in an amount of 30 g, 2 hours later and 15 g, 4 hours later respectively and the unconverted monomer was recovered 8 hours later. The contents were then taken out, filtered and dried and thus approximately 2,400 g of a white powder were obtained.

Measurement was done of the powder's α-olefin content, viscosity average degree of polymerization and the quantity of residual α-olefin monomer. The measured values are shown in Table 7.

The α-olefin content of copolymer was calculated from the copolymer's chlorine content. The viscosity average degree of polymerization was measured according to JIS K-6721. The residual α-olefin was extracted from copolymer with n-hexane and its quantity was determined by gas-chromatography.

Example 44, 45

Instead of α-olefin 10 in carbon number used in Example 43, α-olefin with a carbon number of 18 was used and polymerization was carried out under otherwise the same conditions, and with the copolymer obtained measurement was carried out in the same way. The measured values are shown in Table 7.

Example 46

Polymerization was carried out in the same way as in Example 43, except that the α-olefin used was 30 instead of 10 in carbon number and it was added not in portions but continuously at a rate of 22.5 g/hour in the first 2 hours, 15 g/hour in the second 2 hours and 7.5 g/hour in the third 2 hours and with the copolymer obtained measurement was carried out in the same way. The measured values are also shown in Table 7.

Control example 16

In Example 44, α-olefin with a carbon number of 18 was not added in portions but the whole quantity thereof was charged at the beginning. The unconverted monomer was recovered after the lapse of 8 hours and further procedure was done in the same way.

Control examples 17 and 18

In Example 43, α-olefins varying in carbon number as shown in Table 7 were added in the modes shown in Table 7, instead of α-olefin with a carbon number of 10.

Table 7

| | α-olefin Carbon number | Mode of addition (Parts by wt. to vinyl chloride monomer) | | | α-olefin in copolymer (% by wt.) | Viscosity-average polymerization degree | Residual α-olefin (% by wt. to copolymer) |
|---|---|---|---|---|---|---|---|
| | | 0 | 2 | 4 hr. | | | |
| Example 43 | 10 | 1.5 | 1.0 | 0.5 | 3.1 | 1120 | 0.4 |
| 44 | 18 | 1.5 | 1.0 | 0.5 | 3.2 | 1320 | 0.3 |
| 45 | 18 | 5.0 | 2.0 | 1.0 | 9.3 | 1050 | 0.7 |
| 46 | 30 | Continuous addition | | | 3.5 | 1490 | 0.1 |
| Control example 16 | 18 | 3.0 | 0 | 0 | 2.1 | 1380 | 1.5 |
| 17 | 8 | 6.0 | 3.0 | 1.0 | 9.8 | 630 | 2.2 |
| 18 | 30 | 8.0 | 4.0 | 2.0 | 13.5 | 780 | 3.1 |

From the data in Table 7, it is apparent that an α-olefin-vinyl chloride copolymer not less than 1,000 in polymerization degree, containing 2 - 10 % by weight of α-olefin and containing a small amount of the residual α-olefin monomer is obtained when an α-olefin not less than 10 in carbon number is used and it is added in portions or continuously in the course of polymerization. It is also apparent that, when α-olefin less than 10 in carbon number or the α-olefin content of a copolymer is in excess of 10 weight %, it is difficult to attain not less than 1,000 in viscosity average degree of polymerization.

The reason why the present invention contributes to an improvement of a resinous material's resistance to γ-rays is not yet quite clear but it is presumed that copolymerization of vinyl chloride with α-olefin or vinyl ether makes the resin softer and higher in oxygen transmission coefficient so that the polyene radicals resulting from irradiation with γ-rays are converted into peroxide of improved stability.

As stated above, materials made of copolymers of vinyl chloride/ α-olefin or vinyl ether are stable to γ-rays and also improved in discoloration in the initial stage. Moreover, polyvinyl chloride resin itself is positively reformed with, for instance, reduced problems caused by extracted matters.

Thus, the α-olefin/vinyl chloride or viny ether copolymers of the present invention are not only stable to irradiation with γ-rays but also improved in weatherability, hence they are particularly suited for use as materials of medical instruments, building materials, vehicles exterior materials and the like.

## Claims

1. A γ-ray resistant polyvinyl chloride-based resinous material containing as a major component a vinyl chloride-based copolymer obtained through copolymerization of 100 parts by weight of vinyl chloride with 0.5 - 10 parts by weight of at least one monomer selected from the group consisting of α-olefins and vinyl ethers.

2. A γ-ray resistant polyvinyl chloride-based resinous material in accordance with claim 1, wherein said α-olefin is at least one selected from the group consisting of α-olefins with a carbon number of 4 - 30.

3. A γ-ray resistant polyvinyl chloride-based resinous material in accordance with claim 1, wherein said vinyl ether is at least one selected from the group consisting of vinyl esters with a carbon number of 3 - 25.

4. A γ-ray resistant polyvinyl chloride-based resinous material in accordance with claim 1, wherein said vinyl chloride-based copolymer contains 2 - 10 % by weight of α-olefin not less than 10 in carbon number, the quantity of residual α-olefin monomer is not more than 1 % by weight and the degree of polymerization is not less than 1,000.

5. A γ-ray resistant polyvinyl chloride-based resinous material in accordance with claim 4, wherein said α-olefin is at least one selected from the group consisting of α-olefins with a carbon number of 14 - 30.

6. A γ-ray resistant polyvinyl chloride-based resinous material in accordance with claim 4, wherein the α-olefin content of said copolymer is 3 - 8 % by weight.

7. A manufacturing method of a γ-ray resistant polyvinyl chloride-based resin, wherein 0.5 - 10 parts by weight of at least one monomer selected from the group consisting of α-olefins and vinyl ethers is copolymerized with 100 parts by weight of vinyl chloride.

8. A manufacturing method in accordance with claim 7, wherein an α-olefin not less than 10 in carbon number is used and it is added in portions or continuously in the course of polymerization.

9. The use of the resinous material according to claim 1 for preparing shaped articles.

10. Shaped articles comprising the resinous material according to claim 1 and, if desired, conventional additives and/or auxiliary agents.